# EUROPEAN PATENT SPECIFICATION

(11) **EP 3 831 526 B1**
(45) Date of publication and mention of the grant of the patent: **16.08.2023**
(21) Application number: 20208713.6
(22) Date of filing: 19.11.2020
(51) Int. Cl.: B23K 26/08, B23K 26/28, B23K 37/04

(54) **LASER WELDING METHOD FOR JOINING TWO COMPONENTS OF A PRODUCT OF THE ELECTRONIC CIGARETTE INDUSTRY OR OF THE PHARMACEUTICAL INDUSTRY**
LASER-SCHWEISSMETHODE ZUR VERBINDUNG VON ZWEI KOMPONENTEN EINES PRODUKTS DER ELEKTRONISCHEN ZIGARETTENINDUSTRIE ODER DER PHARMAZEUTISCHEN INDUSTRIE
PROCEDE DE SOUDAGE AU LASER POUR JOINDRE DEUX COMPOSANTS D'UN PRODUIT DE L'INDUSTRIE DE LA CIGARETTE ELECTRONIQUE OU DE L'INDUSTRIE PHARMACEUTIQUE

(30) Priority: 03.12.2019 IT 201900022773
(43) Date of publication of application: 09.06.2021
(73) Proprietor: G.D S.p.A., 40133 Bologna (IT)
(72) Inventor: MADERA, Giovanni, 40133 BOLOGNA (IT); GIANESE, Giampaolo, 40133 BOLOGNA (IT); LAZARINI, Luca, 40133 BOLOGNA (IT)
(74) Representative: Bianciardi, Ezio

(56) References cited:
- WO-A1-2016/061729
- US-A- 5 736 710
- US-A1- 2007 267 009

## Description

This invention addresses the sector of production processes that use laser light sources.

More specifically, this invention relates to a laser welding method for joining two components of a product such as, for example, a product of the electronic cigarette industry or of the pharmaceutical industry.

In this sector, it is common practice to convey products comprising a first component and a second component to a welding station where they are positioned to face a welding head.

Typically, the first and the second component must be welded to each other along a welding path at a surface to be welded, using a laser beam emittable by a welding head.

Operatively, in prior art systems, as for example shown in US2007/267009, WO2016/061729 and in US5736710A, the welding head is moved around the product and the laser beam is directed along the welding path in such a way that the latter remains at all times perpendicular to the surface to be welded.

This solution, however, is not very efficient and has inherent disadvantages which considerably reduce its efficiency.

For example, the welding head is usually awkwardly sized because it needs to contain all the parts needed to generate the laser beam and so its movement around the product requires extremely cumbersome and complex supporting equipment.

This problem is particularly accentuated when the product to be processed has a non-circular cross section, where the welding head must follow a complex trajectory because simply rotating it around the product would not allow keeping the laser beam at all times perpendicular to the surface to be welded.

Moreover, prior art systems have a low production efficiency, since they can only effectively process one product at a time.

In effect, the large amount of space required to allow the welding head to orbit around the product means that processing more than one product at a time with respective welding heads would involve enormous work spaces, with overly complicated feed systems to convey the products to the welding heads.

In this context, the technical purpose which forms the basis of this invention is to provide a laser welding method which overcomes at least some of the above-mentioned drawbacks of the prior art.

More specifically, the aim of this invention is to provide a laser welding method and a laser welding system capable of reducing the structural and operational complexity of the welding heads, making it possible to perform welding processes rapidly and efficiently even on more than one product at a time.

The technical purpose indicated and the aims specified are substantially achieved by a laser welding method comprising the technical features described in one or more of the appended claims.

Provided according to this invention is a laser welding method for joining two components of a product of the electronic cigarette industry or of the pharmaceutical industry.

More specifically, the method applies to products comprising a first component and a second component which have to be welded to each other at a surface to be welded, along a welding path.

The welding method is carried out by disposing the first component and the second component to face a laser welding head at an area for emitting a laser beam in such a way that the laser beam is perpendicular to the surface to be welded at a first point of the welding path.

Next, the laser beam is activated and the product is moved while the laser head is held still, so that the laser beam remains at right angles to the surface to be welded and travels along the welding path to weld the first component and the second component along the welding path.

Advantageously, the method described here allows facilitating the welding process by optimizing the movement logic of the structural elements necessary for performing the weld.

Also an object of this invention is a laser welding system which comprises a laser welding head having a laser beam emitting area disposed at a fixed position.

The laser welding system also comprises movement means for moving a product and configured to grip and move the product along a movement trajectory selected in such a way that the laser beam remains at all times at right angles to the surface to be welded along the entire welding path. More specifically, the system is designed for implementing the method according to this invention.

Advantageously, the system described here allows optimizing the product welding processes in that it allows significantly reducing the structural size and complexity needed to complete the processes correctly.

The dependent claims, which are incorporated herein by reference, correspond to different embodiments of the invention.

Further features of the invention and its advantages are more apparent in the non-limiting description below, with reference to preferred but non-exclusive embodiments of the laser welding method and system, as illustrated in the accompanying drawings, in which:
- Figure 1 is a perspective view of a laser welding method according to the invention;
- Figure 2 shows a detail of a product during the performance of a welding process;
- Figures 3A-3C show different moments in the operation of the method claimed;
- Figures 4A-4C show some of the steps of the welding method according to a first embodiment of it;
- Figures 5A-5B show some of the steps of the welding method according to a second embodiment of it;
- Figure 6 shows a perspective view of a different embodiment of a welding system operating according to the method of this invention;
- Figure 6A shows an enlarged detail of the welding system of Figure 6, identified by a rectangular selection;
- Figure 7 shows a plan view of the system of Figure 6.

The reference numeral 1 in the accompanying drawings generically denotes a laser welding system which, hereinafter in this description, is referred to simply as system 1.

In particular, the system 1 is suitable for performing welding processes on products P of the electronic cigarette industry or of the pharmaceutical industry, wherein each product P comprises a first component P1 and a second component P2 which must be welded to each other, at a surface to be welded, along a welding path S. More specifically, the first component P1 and/or the second component P2 are made of a plastic material.

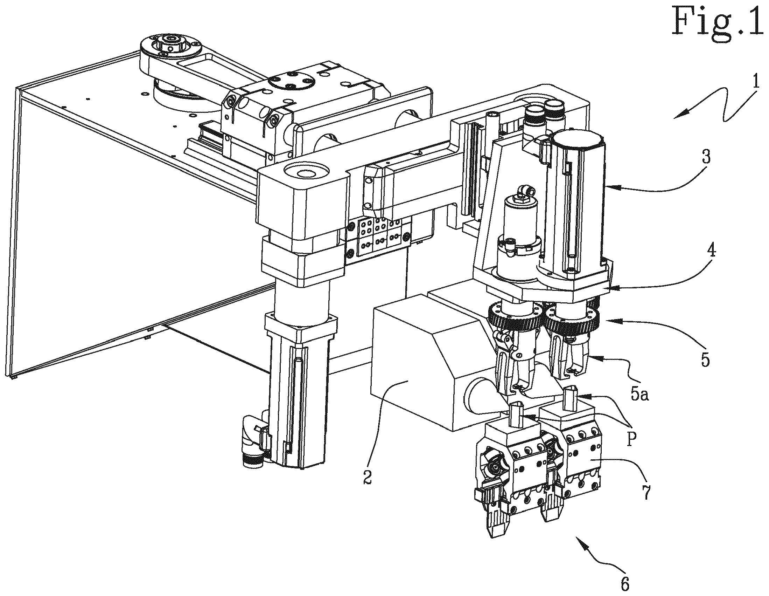

As shown in particular in Figure 1, the system 1 comprises a welding head 2 and movement means 3.

The welding head 2 is mounted at a fixed position - that is to say, it remains immobile especially during the performance of the welding process - and has an area for emitting a laser beam R.

In other words, the welding head 2 is not moved and is configured for generating a laser beam R and directing it into the emitting area along a stationary emitting direction.

According to an aspect of this invention, the welding head is configured to generate a laser beam R having a wavelength of between 380 nanometres and 410 nanometres, preferably 395 nanometres.

Preferably, the laser welding head 2 is configured to emit a continuous laser beam R such as to make an uninterrupted weld along the welding path S or a pulsed laser beam R such as to make a plurality of at least partly superposed weld points along the welding path S.

That way, it is possible to obtain a strong and secure weld capable of ensuring that the components P1 and P2 of the product P are correctly joined together.

The movement means 3, on the other hand, are configured to grip and move the product along a movement trajectory selected in such a way that the laser beam R remains at all times at right angles to the surface to be welded along the entire welding path S.

That way, it is possible to make the weld between the first component P1 and the second component P2 along the welding path S without having to move the welding head 2.

More in detail, the movement means 3 comprise at least a first movement unit 4 configured to move the product translationally in a plane parallel to the laser beam R and at least a second movement unit 5 configured to move the product rotationally and to grip the product P.

In other words, the movement means 3 are embodied by two elements which cooperate to orient the product P in such a way that the welding path S is defined by a scan-like movement in front of the laser beam R which, instead, remains stationary.

The first movement unit 4 may be, for example, a plate 4a and two motors applied to the plate 4a and acting on perpendicular axes to obtain a Cartesian movement.

Thus, the motors are able to move the plate 4a in a plane, specifically a plane parallel to the emitting direction of the laser beam R, in ways discussed in more detail below.

The second movement unit 5, on the other hand, has a gripper-like end 5a, configured for gripping the product P, and is rotatably coupled to the first movement unit 4.

The second movement unit 5 in turn comprises a motor configured to drive in rotation the gripper-like end 5a, hence the product P it is holding.

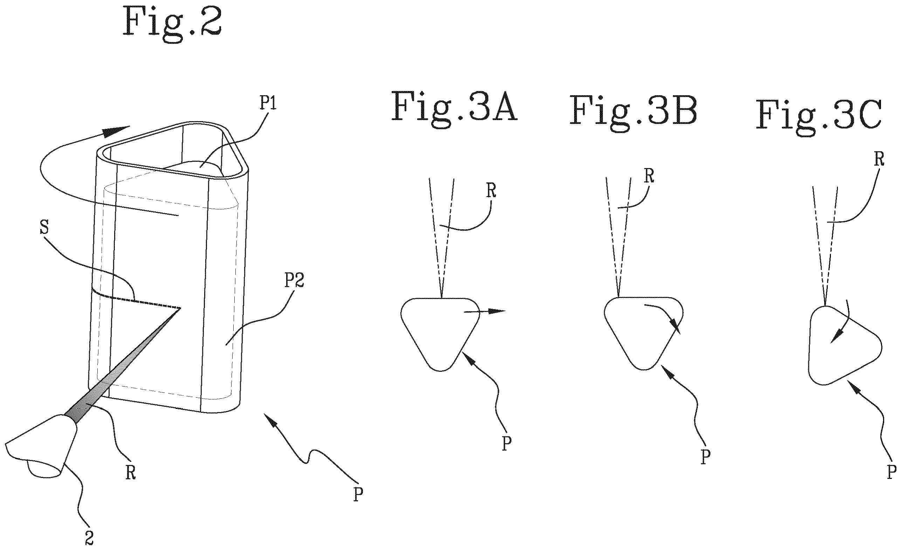

The first and second movement units 4, 5 thus act in conjunction to move the product P according to a rototranslational movement, as shown schematically in Figures 3A-3C, which allows keeping the surface to be welded perpendicular to the laser beam R along the entire welding path S, even and especially in the case where the product P has a non-circular cross section. Furthermore, this rototranslational movement allows the zone to be welded to be disposed continuously at an optimum distance from the laser source, specifically corresponding to the laser focus. Moreover, the movement means 3 are also configured to move each product P vertically so that it can be picked up by feed means 6, described in more detail below, and brought to the area for emitting the laser beam R.

Advantageously, to increase productivity, the system 1 may comprise a pair of welding heads 2 configured to generate stationary, parallel laser beams so as to operate on two products P simultaneously. In a preferred embodiment, the system 1 comprises four welding heads 2.

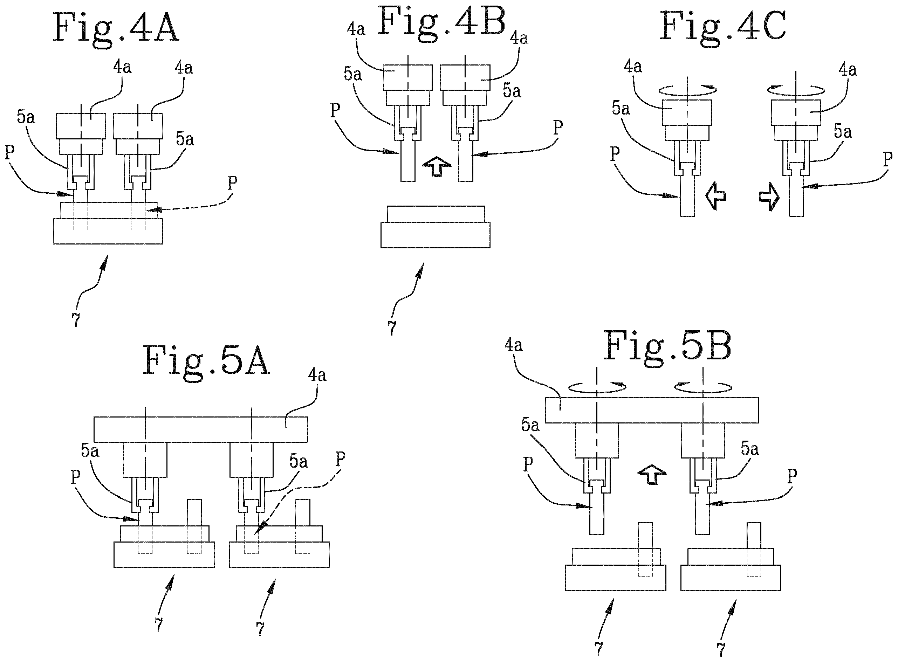

According to this aspect, as shown in Figures 5A and 5B, the movement means 3 may comprise a supporting body (for example, the aforementioned plate 4a) movable by translation in a plane parallel to both laser beams R under the action of one or more respective movement units. Preferably, the movement of each supporting body may be accomplished by two motors acting on perpendicular axes to obtain a Cartesian movement. Thus, the motors are able to move the supporting body in a plane, specifically a plane parallel to the emitting direction of the laser beam R.

The movement means 3 also comprise a pair of second movement units 5 - for example of the gripper type - configured for gripping respective products P to be welded, which are both mounted on the same supporting body.

More specifically, the second movement units 5 are driven synchronously to drive the respective products P to be welded in rotation simultaneously about respective parallel axes - for example in opposite directions, as shown in Figure 5B, or in the same rotation direction.

Preferably, the second movement units 5 are kinematically connected to each other (for example, by a belt or one or more idle wheels) to rotate at the same angular speed and the same rotation direction (synchronous) and driven by the same actuator, specifically an electric motor.

That way, the products P are moved in such a way that the welding process is performed simultaneously on both of them at the same speed, thereby reducing considerably the structural complexity of the mechanisms needed to move them, since a single actuator is sufficient to drive both of them.

Alternatively, as shown by way of example in Figures 4A-4C, the movement means 3 may comprise two distinct supporting bodies (for example, a pair of plates) movable by translation, preferably independently of each other, in the same plane, parallel to the laser beams, under the action of respective movement units. In this case, too, the movement of each supporting body may be accomplished, for example, by two motors acting on perpendicular axes to obtain a Cartesian movement. Thus, the motors are able to move the supporting body in a plane, specifically a plane parallel to the emitting direction of the laser beam R.

In this case, the movement means 3 comprise a pair of second movement units 5 - for example of the gripper type - each associated with the respective supporting body and configured for gripping a respective product P to be welded.

In this case, too, the second movement units 5 are preferably driven synchronously to drive the respective products P to be welded in rotation simultaneously about respective parallel axes in the same direction or in opposite directions.

According to a further advantageous aspect, the system 1 also comprises a feed device 6 embodied in the form of a slideway (not shown in the accompanying drawings) and a plurality of transport carriages 7, preferably independent of each other, for example driven by a linear guide with individually energizable magnets.

The slideway extends along a processing path which allows the products P to be welded to be conveyed to an operating stretch facing the welding heads 2 and the movement means 3.

In other words, the operating stretch extends at the movement means 3 so as to allow the latter to pick up the products P and to interface them with the welding heads 2.

The transport carriages 7 are slidable along the slideway and are each configured to carry a pair of products P, preferably in such a way that the products P are aligned along a main conveying direction defined by the slideway. It is understood that according to an embodiment not illustrated, each transport carriage 7 might carry only one product P or more than two products P.

In this context, therefore, the movement means 3 are configured to grip the products P present in the transport carriages 7 located in the operating stretch and to lift them vertically out of the carriages to bring them to the area for emitting the laser beam R.

In the embodiment shown in Figures 5A and 5B, where the first movement unit 4 of the movement means 3 comprises a single supporting body to which two second movement units 5 are coupled, the feed device 6 is configured for simultaneously feeding a pair of transport carriages 7 to the operating stretch and the two second movement units 5 are configured for gripping a product P from a respective transport carriage 7, specifically homologous products (that is to say, the first or the second product of each carriage). In other words, the feed device 6 conveys two pairs of products P positioned in respective transport carriages 7 to the welding heads 2, while the second movement units 5 of the movement means 3 grip one product P of each pair and bring them to the area for emitting the laser beam R. This leaves a larger spacing between two products of successive carriages, enabling the products to be rotated and welded. The larger spacing between two products of successive carriages also allows using welding heads 2 of a commercial type which are large in size (in particular, larger than the spacing between the products positioned in the same carriage).

When the process of welding the products P has been completed, the movement means 3 take the welded products back to the respective transport carriages 7 and pick up the other product P of each pair so that it, too, can be subjected to the welding process.

In the embodiment shown in Figures 4A-4C, on the other hand, where the first movement unit 4 of the movement means 3 comprises two distinct supporting bodies to which respective movement units 5 are coupled, the feed device 6 is configured to feed the transport carriages 7 to the operating stretch individually in sequence and the second movement units 5 are configured to grip respective products P of the pair and the first movement units 4 are configured to space the respective supporting bodies from each other (Figure 4C) after they have been taken out of the respective carriage (Figure 4B).

In other words, the use of two supporting bodies allows moving the first movement units 4 by translation independently of each other. This aspect is particularly advantageous when the size of the welding heads 2 is such that they have to be set at a distance from each other that is not the same as the distance between two successive products P when they are conveyed by the feed device 6.

In this context, the second movement units 5 may be moved closer together to pick up adjacent products P from the feed device 6 and then move them apart so that the products P face respective welding heads 2. Advantageously, this invention achieves the proposed aims of overcoming the above mentioned disadvantages of the prior art by providing the user with a laser welding system which ensures that the welding process is carried out correctly and allows operating on more than one product P at a time, while at the same time keeping the size reduced and limiting the structural complexity.

Also an object of this invention is a laser welding method for joining two components of a product of the electronic cigarette industry or of the pharmaceutical industry.

The method can advantageously be used for welding products comprising a first component P1 and a second component P2 which have to be welded to each other at a surface to be welded, along a welding path S. Operatively, the method is carried out by disposing the first component P1 and the second component P2 to face a laser welding head 2 at an area for emitting a laser beam R in such a way that the laser beam R is perpendicular to the surface to be welded at a first point of the welding path S.

More specifically, the step of disposing the first component P1 and the second component P2 is carried out by picking up the product P from a feed device 6, preferably made according to what is described in the foregoing, gripping the products P and lifting them vertically out of the feed device 6.

According to a specific aspect of this invention, the method also comprises selecting a wavelength of the laser beam R as a function of the material the first component P1 and the second component P2 are made of.

In effect, the method described herein is used in particular for welding components to be coupled by mutual interference, where the first component P1 and the second component P2 are prepositioned in a configuration of mutual insertion along a coupling surface extending along the welding path S.

Preferably, the first component P1 is positioned inside the second components P2, which comprises and defines a liquid tank, and the components are moved by gripping the second component P2.

In this context, the welding path S extends in a horizontal plane interposed between an inside surface of the second component P2 and an outside surface of the first component P1, thereby ensuring that the liquid is correctly retained inside the tank.

Therefore, the laser beam R is focused at the coupling surface and the welding path S extends on the coupling surface between the first component P1 and the second component P2.

Thus, the laser beam R must have a wavelength such as to enable it to pass through the outer component (the second component P2) and be absorbed by the inner component (the first component P1) at the coupling surface.

Moreover, if the product P to be welded has a non-circular cross section, the welding path S also has a non-circular shape.

More specifically, the product P may have a polygonal shape with rounded edges, more preferably rectangular (or triangular, for example) with rounded edges.

In this case, the welding path S will also have a polygonal shape with rounded edges, extending substantially along the perimeter of the product P at a coupling level between the first component P1 and the second component P2.

Once the components have been positioned, the laser beam R is activated and the product P moved while the laser head 2 is held still, so that the laser beam R remains at right angles to the surface to be welded and travels along the welding path S to weld the first component P1 and the second component P2 along the welding path S.

Preferably, the laser beam R is driven in such a way as to weld the first component P1 continuously to the second component P2.

That way, it is possible to make a product P with a continuous, hence fluid-tight, weld between the first component P1 and the second component P2, making it particularly suitable for containing liquids or fluids in general. Further, the product P is moved by a rototranslational movement.

The rototranslational movement may occur entirely in a single plane, preferably a plane parallel to the laser beam R.

This ensures that the laser beam R remains perpendicular to the surface to be welded along the entire welding path S.

More in detail, the rototranslational movement comprises a translational movement, preferably performed by a first movement unit 4 and a rotational movement performed by a second movement unit 5.

The movement units 4, 5 are preferably made according to what is described above with regard to the laser welding system 1.

In order to optimize the production process by increasing the processable volumes, the method may be carried out by disposing at least one pair of products P to face respective laser welding heads 2 at an area for emitting respective laser beams R.

The laser beams R are thus activated simultaneously while the products P are moved in such a way that each welding head 2 makes a laser weld on the respective product P.

During the entire welding process in which the laser beam R is activated, each welding head 2 remains stationary.

In effect, the part moved is the product P, which is significantly smaller in size than the welding head 2.

That way, besides simplifying the movement process as a whole, the resulting weld is of high quality because the focus of the laser beam R remains fixed and only the product P is moved in such a way that the welding path corresponds to the focus at all times.

Thus, unlike prior art systems, it is not necessary to continuously modify the operating parameters of the welding head 2.

According to a first aspect of this invention, the method also comprises feeding a first and a second pair of products P by means of respective transport carriages 7, as shown in Figure 5A.

In this context, the step of disposing the products P is performed by gripping a product P of each pair with respective second movement units 5, as shown in Figure 5B. Next, one product P of each pair of products P is disposed to face a respective welding head 2 at an area for emitting the respective laser beam R, so as to perform a first welding process.

When the first welding process has been completed, the products P already processed are retransferred to the feed means 6 and the second movement units 5 proceed to pick up other products P of each pair to subject them to a welding process, too.

Alternatively, the method comprises feeding a pair of products P by means of a single transport carriage 7, as shown in Figure 4A.

In this context, the step of disposing the products P is carried out by picking up the products P and spacing them from each other before positioning them to face a respective welding head 2 at an area for emitting the respective laser beam R.

More in detail, as may be observed in Figures 4B and 4C, the second movement units 5 grip respective products P and lift them out of the transport carriage 7 (Figure 4B) and then space them apart (Figure 4C).

In other words, it is possible to adapt the spacing between the products P by moving them in such a way as, for example, to keep them close together when they are transported by the feed means (thereby optimizing the use of available space) and to move them apart to perform the welding process, so as to avoid interference between the two and make it easier to move them.

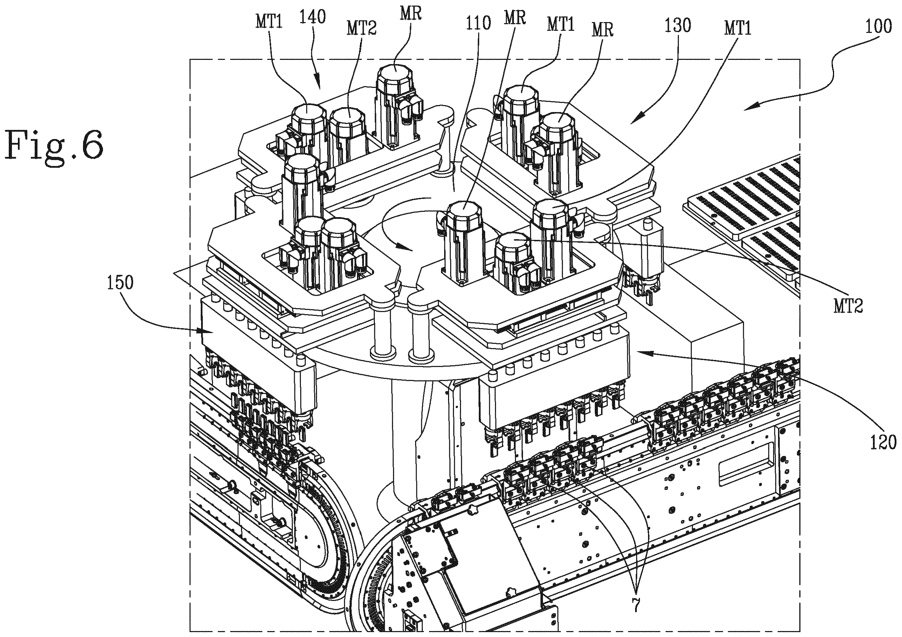

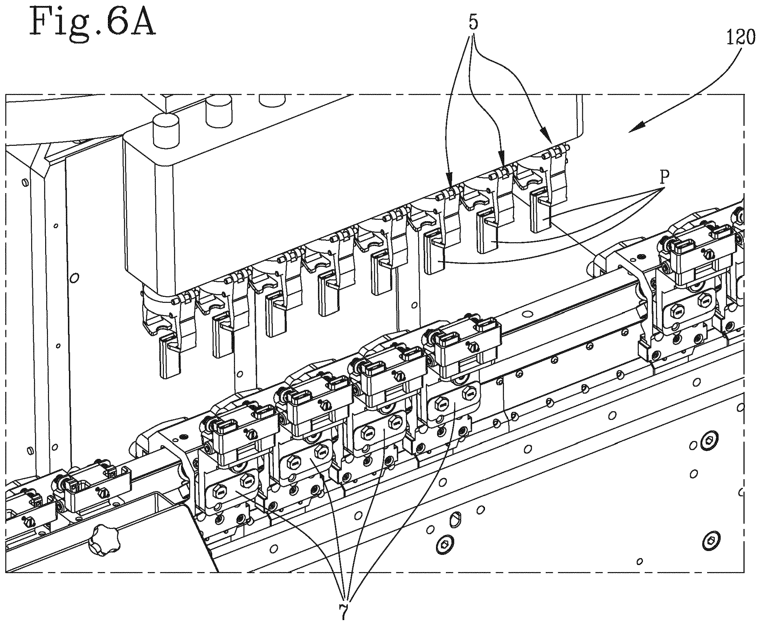

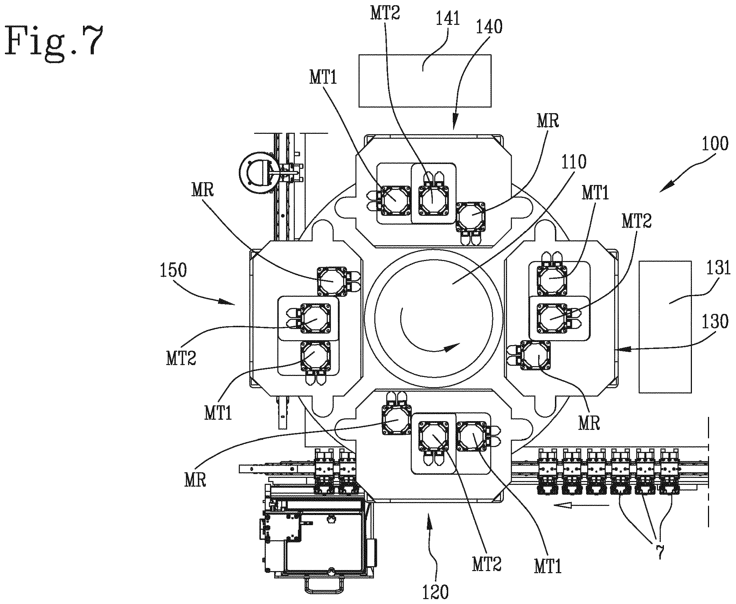

Figures 6 and 7 show a different embodiment of a welding system operating according to the method of this invention. In this embodiment, the products P illustrated are in the form of parts with a substantially rectangular cross section with rounded edges, although the shape of the products P is irrelevant for the purposes of the invention (provided it is not circular).

The system, denoted in its entirety by the numeral 100, comprises a rotary turret 110 rotatable about a vertical axis and equipped with a plurality of supporting bodies (not explicitly shown in Figures 6-7), specifically four bodies angularly distributed around the axis of rotation of the turret 100, spaced at 90° from each other. However, a different number of supporting bodies is imaginable, depending on requirements.

Each supporting body is moved in sequence as a result of the intermittent rotation of the turret 100 (in anticlockwise direction in Figure 7), between a pickup station 120 for picking up the products P, a first welding station 130 for welding the products P, a second welding station 140 for welding the products P and an unloading station 150 for unloading the products P. The pickup station 120 is visible in detail in Figure 6A. In order to pick up a plurality of products P simultaneously, each supporting body mounts a plurality of movement units 5 driven synchronously to drive the respective products P to be welded in rotation simultaneously about respective parallel axes.

In the embodiment illustrated, each supporting body mounts eight movement units 5, although a different number of them is imaginable. It is, however, preferable that all the movement units 5 mounted on the same supporting body be aligned with each other, specifically along a direction parallel to the direction of movement of the products P on the transport carriages 7.

To move all the movement units 5 simultaneously, the following means are preferably provided:
- for translating all of them horizontally (towards and way from the laser source) and/or vertically by translation of the supporting body, specifically with respective motors MT1 and MT2;
- for rotating them simultaneously with a single motor MR which simultaneously drives the gears that operate the movement units 5, which are kept meshed to each other for example by a solution of the kind illustrated in the drawing (specifically by a single gear train driven by the rotational drive motor MR).

The two welding stations 130, 140 are equipped with respective welding units 131, 141, facing the products P which are disposed in the welding stations 130, 140.

In a preferred embodiment, each welding station 130, 140 welds a sub-group of products P, specifically in such a way that while the first welding station 130 welds some of the products P supported on the supporting body, the other welding station 140, (in the next instant) welds the remaining products P supported on the same supporting body. For example, these welds may be carried out alternately: that is to say, the first welding station 130 welds the products P disposed in the even positions, while the other welding station 140 welds the remaining products P, which are disposed in the odd positions, or vice versa. However, while the first welding station 130 welds some of the products P supported on the supporting body, the other welding station 140 (in the same instant) welds some of the products P supported on the adjacent supporting body.

Similarly to the embodiment of Figure 1, the movement logic of the transport carriages 7 is, in this case, too, such as to transfer simultaneously groups of products P in a number corresponding to the number of movement units 5 of each supporting unit. Advantageously, the method described herein overcomes the above mentioned disadvantages of the prior art in that it allows optimizing the production processes where two components of a product P need to be welded to each other, in particular in the electronic cigarette industry or in the pharmaceutical industry. In effect, the welding method significantly simplifies the welding process in that the product P to be welded is moved, whilst the welding head 2, which is more cumbersome, remains stationary.

## Claims

1. A laser welding method for joining two components of a product (P) of the electronic cigarette industry or of the pharmaceutical industry, wherein the product (P) comprises a first component (P1) and a second component (P2) which must be welded to each other, at a surface to be welded, along a welding path (S);
the welding method comprising the following steps:
- disposing the first component (P1) and the second component (P2) to face a laser welding head (2) at an area for emitting a laser beam (R) in such a way that the laser beam (R) is perpendicular to the surface to be welded at a first point of the welding path (S);
- activating the laser beam (R) and moving the product (P) while holding the laser head (2) still, so that the laser beam (R) remains at right angles to the surface to be welded and travels along the welding path (S) to weld the first component (P1) and the second component (P2) along the welding path (S),
**characterized in that** the step of disposing the first component (P1) and the second component (P2) to face the laser welding head (2) is performed by picking up the product (P) from a product (P) feed device (6) according to a vertical movement.

2. The method according to claim 1, wherein the step of moving the product (P) is performed by moving the product (P) with a rototranslational movement, and wherein the rototranslational movement occurs in a plane of movement preferably parallel to the laser beam (R).

3. The method according to claim 2, wherein the rototranslational movement comprises a translational movement performed by a first movement unit (4) and a rotational movement performed by a second movement unit (5).

4. The method according to one or more of the preceding claims, wherein the welding path (S) has a non-circular shape, specifically a polygonal shape with rounded corners, preferably rectangular with rounded corners.

5. The method according to one or more of the preceding claims, wherein, before the step of disposing the first component (P1) and the second component (P2) to face a laser welding head (2), the method comprises a step of arranging the first component (P1) and the second component (P2) in a configuration of mutual insertion, specifically by interference along a coupling surface which extends along the welding path (S), in such a way that the first component (P1) is disposed inside the second component (P2), and by moving the components by gripping the second component (P2).

6. The method according to one or more of the preceding claims, wherein the step of activating the laser beam (R) and moving the product (P) is performed in such a way as to make a seam weld joining the first component (P1) to the second component (P2).

7. The method according to one or more of the preceding claims, wherein the welding method comprises the following steps:
- disposing at least one pair of products (P) to face respective laser welding heads (2) at an area for emitting respective laser beams (R);
- simultaneously activating the laser beams (R) and simultaneously moving the products (P) while holding the laser heads (2) still, so that each welding head (2) makes a laser weld on the respective product (P).

8. The method according to claim 7, wherein the step of disposing at least one pair of products (P) comprises the following steps:
- feeding a first and a second pair of products (P) by means of respective transport carriages (7);
- disposing one product (P) of each pair of products (P) to face a respective laser welding head (2) at an area for emitting the respective laser beam (R).

9. The method according to claim 7, wherein the step of disposing at least one pair of products (P) comprises the following steps:
- feeding a pair of products (P) by means of a transport carriage (7);
- spacing the products (P) of the pair of products (P) from each other;
- disposing each product (P) to face respective laser welding heads (2) at an area for emitting respective laser beams (R).

10. A laser welding system for joining two components of a product (P) of the electronic cigarette industry or of the pharmaceutical industry, wherein the product (P) comprises a first component (P1) and a second component (P2) which must be welded to each other, at a surface to be welded, along a welding path (S);
the welding system comprising:
- a laser welding head (2) provided with an area for emitting a laser beam (R), the welding head (2) being disposed at a fixed position,
- movement means (3) for moving the product (P) and configured to grip and move the product (P) along a movement trajectory selected in such a way that the laser beam (R) remains at all times at right angles to the surface to be welded along the entire welding path (S) in such a way as to weld the first component (P1) and the second component (P2) along the welding path (S);
wherein the welding system also comprises a feed device (6) comprising:
- a slideway having an operating stretch facing the welding heads (2) and the movement means (3);
- a plurality of transport carriages (7) slidable along the slideway, each transport carriage (7) being configured to transport a pair of products (P);
and **characterized in that** the movement means are configured to move the products (P) vertically in such a way as to extract the products (P) from the respective transport carriages (7).

11. The system according to claim 10, wherein the movement means (3) comprise at least a first movement unit (4) configured to move the product (P) translationally in a plane parallel to the laser beam (R) and at least a second movement unit (5) configured to move the product (P) rotationally and to grip the product (P).

12. The system according to claim 10 or 11, comprising a pair of welding heads (2) configured to generate stationary, parallel laser beams (R) and a plurality of second movement units (5) configured to grip respective products (P) to be welded, wherein the movement means (3) comprise at least one supporting body movable by translation in a plane parallel to the laser beams (R) under the action of the at least one first movement unit (4), and wherein the second movement units (5) are mounted on the supporting body and are driven synchronously to set the respective products (P) to be welded in rotation simultaneously about respective parallel axes.

13. The system according to claim 12, wherein the second movement units (5) are kinematically connected to rotate at the same angular speed and are driven by a common actuator, specifically an electric motor.

14. The system according to claim 12 or 13, wherein the feed device (6) is configured to simultaneously feed a plurality of transport carriages (7) at the operating stretch and the second movement units (5) are configured to grip a product (P) of the pair of products (P) from a respective transport carriage (7).

15. The system according to any one of claims from 12 to 14, comprising a turret (110) rotatable about a preferably vertical axis and equipped with a plurality of the supporting bodies to move each supporting body in sequence between a pickup station (120) for picking up the products (P), a first welding station (130) for welding the products (P), a second welding station (140) for welding the products (P) and an unloading station (150) for unloading the products (P), there being preferably four supporting bodies angularly distributed around the axis of rotation of the turret (110), and wherein disposed on each supporting body there are a plurality of supporting units (5) driven synchronously to set the respective products (P) to be welded in rotation simultaneously about respective parallel axes.

16. The system according to claim 15, wherein one of the welding stations (130, 140) welds a sub-group (S) of products supported by the same supporting body, while in the next instant, the other welding station (130, 140) welds the remaining products (P) supported on the same supporting body.

17. The system according to claim 10 or 11, comprising a pair of welding heads (2) configured to generate stationary, parallel laser beams (R) and a pair of second movement units (5) configured to grip respective products (P) to be welded, wherein the movement means (3) comprise two supporting bodies movable by translation, preferably independently, in a plane parallel to the laser beams (R) under the action of the at least one respective first movement unit (4), and wherein each of the second movement units (5) is mounted on the respective supporting body and is driven in rotation about a respective axis.

18. The system according to claim 17, wherein the feed device (6) is configured to feed the transport carriages (7) individually in sequence at the operating stretch and the second movement units (5) are configured to grip respective products (P) of the pair of products (P); the first movement units (4) being configured to space the respective supporting bodies apart from each other.

## Patentansprüche

1. Laserschweißmethode zur Verbindung von zwei Komponenten eines Produkts (P) der Industrie elektronischer Zigaretten oder der pharmazeutischen Industrie, wobei das Produkt (P) eine erste Komponente (P1) und eine zweite Komponente (P2) umfasst, die an einer zu schweißenden Oberfläche entlang eines Schweißwegs (S) miteinander verschweißt werden müssen, wobei die Methode die folgenden Schritte umfasst:
- Anordnen der ersten Komponente (P1) und der zweiten Komponente (P2), um einem Laserschweißkopf (2) an einem Bereich zum Aussenden eines Laserstrahls (R) zugewandt zu sein, sodass der Laserstrahl (R) senkrecht zur zu schweißenden Oberfläche an einem ersten Punkt des Schweißwegs (S) angeordnet ist;
- Aktivieren des Laserstrahls (R) und Bewegen des Produkts (P), während der Laserkopf (2) unbewegt gehalten wird, sodass der Laserstrahl (R) an rechten Winkeln zur zu schweißenden Oberfläche bleibt und entlang des Schweißwegs (S) fährt, um die erste Komponente (P1) und die zweite Komponente (P2) entlang des Schweißwegs (S) zu schweißen,
**dadurch gekennzeichnet, dass** der Schritt zum Anordnen der ersten Komponente (P1) und der zweiten Komponente (P2), um dem Laserschweißkopf (2) zugewandt zu sein, durchgeführt wird, indem das Produkt (P) von einer Zuführungsvorrichtung (6) für das Produkt (P) nach einer vertikalen Bewegung aufgenommen wird.

2. Methode nach Anspruch 1, wobei der Schritt zum Bewegen des Produkts (P) durch das Bewegen des Produkts (P) mit einer rotatorisch-translatorischen Bewegung durchgeführt wird, und wobei die rotatorischtranslatorische Bewegung in einer Bewegungsebene stattfindet, die vorzugsweise parallel zum Laserstrahl (R) verläuft.

3. Methode nach Anspruch 2, wobei die rotatorischtranslatorische Bewegung eine translatorische Bewegung, die von einer ersten Bewegungseinheit (4) durchgeführt wird, und eine rotatorische Bewegung umfasst, die von einer zweiten Bewegungseinheit (5) durchgeführt wird.

4. Methode nach einem oder mehreren der vorhergehenden Ansprüche, wobei der Schweißweg (S) eine nicht kreisförmige Form aufweist, insbesondere eine vieleckige Form mit abgerundeten Ecken, vorzugsweise rechteckig mit abgerundeten Ecken.

5. Methode nach einem oder mehreren der vorhergehenden Ansprüche, wobei die Methode vor dem Schritt zum Anordnen der ersten Komponente (P1) und der zweiten Komponente (P2), um einem Laserschweißkopf (2) zugewandt zu sein, einen Schritt zum Anordnen der ersten Komponente (P1) und der zweiten Komponente (P2) in einer Auslegung der gegenseitigen Einfügung, insbesondere per Presspassung entlang einer Kupplungsoberfläche, die sich entlang des Schweißwegs (S) erstreckt, sodass die erste Komponente (P1) in der zweiten Komponente (P2) angeordnet ist, und durch Bewegen der Komponenten durch Greifen der zweiten Komponente (P2) umfasst.

6. Methode nach einem oder mehreren der vorhergehenden Ansprüche, wobei der Schritt zum Aktivieren des Laserstrahls (R) und Bewegen des Produkts (P) so durchgeführt wird, dass eine Schweißnaht hergestellt wird, die die erste Komponente (P1) mit der zweiten Komponente (P2) verbindet.

7. Methode nach einem oder mehreren der vorhergehenden Ansprüche, wobei die Schweißmethode die folgenden Schritte umfasst:
- Anordnen von mindestens einem Paar von Produkten (P), um den jeweiligen Laserschweißköpfen (2) an einem Bereich zum Aussenden jeweiliger Laserstrahlen (R) zugewandt zu sein;
- gleichzeitiges Aktivieren der Laserstrahlen (R) und gleichzeitiges Bewegen der Produkte (P), während die Laserköpfe (2) unbewegt gehalten werden, sodass ein jeder Laserkopf (2) eine Laserschweißung auf dem jeweiligen Produkt (P) herstellt.

8. Methode nach Anspruch 7, wobei der Schritt zum Anordnen von mindestens einem Paar von Produkten (P) die folgenden Schritte umfasst:
- Zuführen eines ersten und eines zweiten Paars von Produkten (P) durch jeweilige Transportwagen (7);
- Anordnen eines Produkts (P) eines jeden Paars von Produkten (P), um einem jeweiligen Laserschweißkopf (2) an einem Bereich zum Aussenden des jeweiligen Laserstrahls (R) zugewandt zu sein.

9. Methode nach Anspruch 7, wobei der Schritt zum Anordnen von mindestens einem Paar von Produkten (P) die folgenden Schritte umfasst:
- Zuführen eines Paars von Produkten (P) durch einen Transportwagen (7);
- Beabstanden der Produkte (P) des Paars von Produkten (P) voneinander;
- Anordnen eines jeden Produkts (P), um jeweiligen Laserschweißköpfen (2) an einem Bereich zum Aussenden jeweiliger Laserstrahlen (R) zugewandt zu sein.

10. Laserschweißsystem zur Verbindung von zwei Komponenten eines Produkts (P) der Industrie elektronischer Zigaretten oder der pharmazeutischen Industrie, wobei das Produkt (P) eine erste Komponente (P1) und eine zweite Komponente (P2) umfasst, die an einer zu schweißenden Oberfläche entlang eines Schweißwegs (S) miteinander verschweißt werden müssen, wobei das Schweißsystem Folgendes umfasst:
- einen Laserschweißkopf (2), der mit einem Bereich zum Aussenden eines Laserstrahls (R) versehen ist, wobei der Schweißkopf (2) an einer fixierten Position angeordnet ist;
- Bewegungsmittel (3) zum Bewegen des Produkts (P) und ausgelegt, um das Produkt (P) entlang einer Bewegungsbahn zu greifen und zu bewegen, die so ausgewählt wurde, dass der Laserstrahl (R) jederzeit an rechten Winkeln zur zu schweißenden Oberfläche entlang des gesamten Schweißwegs (S) bleibt, sodass die erste Komponente (P1) und die zweite Komponente (P2) entlang des Schweißwegs (S) verschweißt werden,
wobei das Schweißsystem auch eine Zuführungsvorrichtung (6) umfasst, die Folgendes umfasst:
- eine Führungsbahn, aufweisend ein Betriebsteilstück, das den Schweißköpfen (2) und den Bewegungsmitteln (3) zugewandt ist;
- eine Vielzahl von Transportwagen (7), die entlang der Führungsbahn verschiebbar sind, wobei ein jeder Transportwagen (7) ausgelegt ist, um ein Paar von Produkten (P) zu transportieren,
und **dadurch gekennzeichnet, dass** die Bewegungsmittel ausgelegt sind, um die Produkte (P) vertikal zu bewegen, sodass die Produkte (P) aus den jeweiligen Transportwagen (7) herausgezogen werden.

11. System nach Anspruch 10, wobei die Bewegungsmittel (3) mindestens eine erste Bewegungseinheit (4) umfassen, die ausgelegt ist, um das Produkt (P) translatorisch in einer Ebene zu bewegen, die parallel zum Laserstrahl (R) verläuft, und mindestens eine zweite Bewegungseinheit (5), die ausgelegt ist, um das Produkt (P) rotatorisch zu bewegen und das Produkt (P) zu greifen.

12. System nach Anspruch 10 oder 11, umfassend ein Paar von Schweißköpfen (2), die ausgelegt sind, um stationäre, parallele Laserstrahlen (R) zu generieren, und eine Vielzahl von zweiten Bewegungseinheiten (5), die ausgelegt sind, um jeweilige zu schweißende Produkte (P) zu greifen, wobei die Bewegungsmittel (3) mindestens einen Tragekörper umfassen, der durch Translation in einer Ebene bewegbar ist, die parallel zu den Laserstrahlen (R) verläuft, unter der Wirkung der mindestens einen ersten Bewegungseinheit (4), und wobei die zweiten Bewegungseinheiten (5) auf dem Tragekörper montiert sind und synchron angetrieben werden, um die jeweiligen zu schweißenden Produkte (P) simultan um jeweilige parallele Achsen in Drehung zu versetzen.

13. System nach Anspruch 12, wobei die zweiten Bewegungseinheiten (5) kinematisch verbunden sind, um sich bei der gleichen Winkelgeschwindigkeit zu drehen, und von einem gemeinsamen Aktor, insbesondere einem Elektromotor, angetrieben zu werden.

14. System nach Anspruch 12 oder 13, wobei die Zuführungsvorrichtung (6) ausgelegt ist, um gleichzeitig eine Vielzahl von Transportwagen (7) am Betriebsteilstück zuzuführen, und die zweiten Bewegungseinheiten (5) ausgelegt sind, um ein Produkt (P) des Paars von Produkten (P) von einem jeweiligen Transportwagen (7) zu greifen.

15. System nach einem der Ansprüche 12 bis 14, umfassend ein Spulenrad (110), das vorzugsweise um eine vertikale Achse drehbar und mit einer Vielzahl von Tragekörpern ausgestattet ist, um einen jeden Tragekörper nacheinander zwischen einer Aufnahmestation (120) zum Aufnehmen der Produkte (P), einer ersten Schweißstation (130) zum Schweißen der Produkte (P), einer zweiten Schweißstation (140) zum Schweißen der Produkte (P) und einer Abladestation (150) zum Abladen der Produkte (P) zu bewegen, wobei vorzugsweise vier Tragekörper winkelig rund um die Rotationsachse des Spulenrads (110) verteilt sind und wobei auf jedem Tragekörper eine Vielzahl von Trageeinheiten (5) bereitgestellt ist, die synchron angetrieben werden, um die jeweiligen zu schweißenden Produkte (P) simultan um jeweilige parallele Achsen in Drehung zu versetzen.

16. System nach Anspruch 15, wobei eine der Schweißstationen (130, 140) eine Untergruppe (S) von Produkten schweißt, die vom gleichen Tragekörper getragen werden, während die andere Schweißstation (130, 140) im nächsten Augenblick die restlichen Produkte (P) schweißt, die auf dem gleichen Tragekörper getragen werden.

17. System nach Anspruch 10 oder 11, umfassend ein Paar von Schweißköpfen (2), die ausgelegt sind, um stationäre, parallele Laserstrahlen (R) zu generieren, und ein Paar zweiten Bewegungseinheiten (5), die ausgelegt sind, um jeweilige zu schweißende Produkte (P) zu greifen, wobei die Bewegungsmittel (3) zwei Tragekörper umfassen, die durch Translation vorzugsweise unabhängig in einer Ebene bewegbar sind, die parallel zu den Laserstrahlen (R) verläuft, unter der Wirkung der mindestens einen jeweiligen ersten Bewegungseinheit (4), und wobei eine jede der zweiten Bewegungseinheiten (5) auf dem jeweiligen Tragekörper montiert ist und um eine jeweilige Achse in Drehung versetzt wird.

18. System nach Anspruch 17, wobei die Zuführungsvorrichtung (6) ausgelegt ist, um die Transportwagen (7) einzeln nacheinander am Betriebsteilstück zuzuführen, und die zweiten Bewegungseinheiten (5) ausgelegt sind, um jeweilige Produkte (P) des Paars von Produkten (P) zu greifen, wobei die ersten Bewegungseinheiten (4) ausgelegt sind, um die jeweiligen Tragekörper voneinander zu beabstanden.

## Revendications

1. Procédé de soudage au laser pour joindre deux composants d'un produit (P) de l'industrie de la cigarette électronique ou de l'industrie pharmaceutique, dans lequel le produit (P) comprend un premier composant (P1) et un deuxième composant (P2) qui doivent être soudés l'un à l'autre, en correspondance d'une surface à souder, le long d'une trajectoire de soudage (S) ;
le procédé de soudage comprenant les étapes suivantes :
- disposer le premier composant (P1) et le deuxième composant (P2) face à une tête de soudage laser (2) en correspondance d'une zone d'émission d'un faisceau laser (R) de manière à ce que le faisceau laser (R) soit perpendiculaire à la surface à souder en correspondance d'un premier point de la trajectoire de soudage (S) ;
- activer le faisceau laser (R) et déplacer le produit (P) tout en maintenant la tête laser (2) immobile, de sorte que le faisceau laser (R) reste perpendiculaire à la surface à souder et se déplace le long de la trajectoire de soudage (S) pour souder le premier composant (P1) et le deuxième composant (P2) le long de la trajectoire de soudage (S),
**caractérisé en ce que** l'étape consistant à disposer le premier composant (P1) et le deuxième composant (P2) face à la tête de soudage laser (2) est réalisée en saisissant le produit (P) à partir d'un dispositif d'alimentation (6) de produit (P) selon un déplacement vertical.

2. Procédé selon la revendication 1, dans lequel l'étape de déplacement du produit (P) est réalisée en déplaçant le produit (P) selon un mouvement de rotation-translation, et dans lequel le mouvement de rotation-translation se produit dans un plan de déplacement de préférence parallèle au faisceau laser (R).

3. Procédé selon la revendication 2, dans lequel le mouvement de rotation-translation comprend un mouvement de translation effectué par une première unité de mouvement (4) et un mouvement de rotation effectué par une deuxième unité de mouvement (5).

4. Procédé selon l'une ou plusieurs des revendications précédentes, dans lequel la trajectoire de soudage (S) a une forme non circulaire, en particulier une forme polygonale avec des coins arrondis, de préférence rectangulaire avec des coins arrondis.

5. Procédé selon une ou plusieurs des revendications précédentes, dans lequel, avant l'étape consistant à disposer le premier composant (P1) et le deuxième composant (P2) face à une tête de soudage laser (2), le procédé comprend une étape consistant à disposer le premier composant (P1) et le deuxième composant (P2) dans une configuration d'insertion mutuelle, plus précisément par interférence le long d'une surface de couplage qui se prolonge le long de la trajectoire de soudage (S), de telle sorte que le premier composant (P1) soit disposé à l'intérieur du deuxième composant (P2), et en déplaçant les composants en saisissant le deuxième composant (P2).

6. Procédé selon une ou plusieurs des revendications précédentes, dans lequel l'étape d'activation du faisceau laser (R) et de déplacement du produit (P) est effectuée de manière à réaliser une soudure continue joignant le premier composant (P1) au deuxième composant (P2) .

7. Procédé selon une ou plusieurs des revendications précédentes, dans lequel le procédé de soudage comprend les étapes suivantes :
- disposer au moins une paire de produits (P) face à des têtes de soudage laser (2) respectives en correspondance d'une zone d'émission de faisceaux laser (R) respectifs ;
- activer simultanément les faisceaux laser (R) et déplacer simultanément les produits (P) tout en maintenant les têtes laser (2) immobiles, de sorte que chaque tête de soudage (2) réalise une soudure laser sur le produit (P) respectif.

8. Procédé selon la revendication 7, dans lequel l'étape consistant à disposer au moins une paire de produits (P) comprend les étapes suivantes :
- alimenter une première et une deuxième paire de produits (P) au moyen de chariots de transport (7) respectifs ;
- disposer un produit (P) de chaque paire de produits (P) face à une tête de soudage laser (2) respective en correspondance d'une zone d'émission de faisceau laser (R) respectif.

9. Procédé selon la revendication 7, dans lequel l'étape consistant à disposer au moins une paire de produits (P) comprend les étapes suivantes :
- alimenter une paire de produits (P) au moyen d'un chariot de transport (7) ;
- espacer les produits (P) de la paire de produits (P) l'un de l'autre ;
- disposer chaque produit (P) face aux têtes de soudage laser (2) respectives dans une zone d'émission de faisceaux laser (R) respectifs.

10. Système de soudage au laser pour joindre deux composants d'un produit (P) de l'industrie de la cigarette électronique ou de l'industrie pharmaceutique, dans lequel le produit (P) comprend un premier composant (P1) et un deuxième composant (P2) qui doivent être soudés l'un à l'autre, en correspondance d'une surface à souder, le long d'une trajectoire de soudage (S) ;
le système de soudage comprenant :
- une tête de soudage laser (2) pourvue d'une zone d'émission d'un faisceau laser (R), la tête de soudage (2) étant disposée à une position fixe,
- des moyens de déplacement (3) pour déplacer le produit (P) et configurés pour saisir et déplacer le produit (P) le long d'une trajectoire de déplacement choisie de manière à ce que le faisceau laser (R) reste à tout moment à angle droit par rapport à la surface à souder le long de l'ensemble de la trajectoire de soudage (S) de manière à souder le premier composant (P1) et le deuxième composant (P2) le long de la trajectoire de soudage (S) ;
dans lequel le système de soudage comprend également un dispositif d'alimentation (6), comprenant :
- une glissière comportant un tronçon de fonctionnement faisant face aux têtes de soudage (2) et aux moyens de déplacement (3) ;
- une pluralité de chariots de transport (7) pouvant coulisser le long de la glissière, chaque chariot de transport (7) étant configuré pour transporter une paire de produits (P) ;
et **caractérisé en ce que** les moyens de déplacement sont configurés pour déplacer les produits (P) verticalement de manière à extraire les produits (P) des chariots de transport (7) respectifs.

11. Système selon la revendication 10, dans lequel les moyens de déplacement (3) comprennent au moins une première unité de mouvement (4) configurée pour déplacer le produit (P) en translation dans un plan parallèle au faisceau laser (R) et au moins une deuxième unité de mouvement (5) configurée pour déplacer le produit (P) en rotation et pour saisir le produit (P).

12. Système selon la revendication 10 ou 11, comprenant une paire de têtes de soudage (2) configurées pour générer des faisceaux laser stationnaires et parallèles (R) et une pluralité de deuxièmes unités de mouvement (5) configurées pour saisir les produits respectifs (P) à souder, dans lequel les moyens de déplacement (3) comprennent au moins un corps de support mobile par translation dans un plan parallèle aux faisceaux laser (R) sous l'action d'au moins une première unité de mouvement (4), et dans lequel les deuxièmes unités de mouvement (5) sont montées sur le corps de support et sont entraînées de manière synchrone pour mettre les produits respectifs (P) à souder en rotation simultanément autour d'axes parallèles respectifs.

13. Système selon la revendication 12, dans lequel les deuxièmes unités de mouvement (5) sont raccordées de façon cinématique pour tourner à la même vitesse angulaire et sont entraînées par un actionneur commun, en particulier un moteur électrique.

14. Système selon la revendication 12 ou 13, dans lequel le dispositif d'alimentation (6) est configuré pour alimenter simultanément une pluralité de chariots de transport (7) en correspondance du tronçon de fonctionnement et les deuxièmes unités de mouvement (5) sont configurées pour saisir un produit (P) de la paire de produits (P) à partir d'un chariot de transport (7) respectif.

15. Système selon l'une quelconque des revendications 12 à 14, comprenant une tourelle (110) rotative autour d'un axe de préférence vertical et équipée d'une pluralité de corps de support pour déplacer chaque corps de support en séquence entre un poste de préhension (120) pour saisir les produits (P), un premier poste de soudage (130) pour souder les produits (P), un deuxième poste de soudage (140) pour souder les produits (P) et un poste de déchargement (150) pour décharger les produits (P), avec de préférence quatre corps de support répartis de façon angulaire autour de l'axe de rotation de la tourelle (110), et dans lequel, disposées sur chaque corps de support, se trouvent plusieurs unités de support (5) entraînées de manière synchrone pour mettre les produits (P) respectifs à souder en rotation simultanément autour d'axes parallèles respectifs.

16. Système selon la revendication 15, dans lequel l'un des postes de soudage (130, 140) soude un sous-groupe (S) de produits supportés par le même corps de support, tandis qu'à l'instant suivant, l'autre poste de soudage (130, 140) soude les produits restants (P) supportés par le même corps de support.

17. Système selon la revendication 10 ou 11, comprenant une paire de têtes de soudage (2) configurées pour générer des faisceaux laser stationnaires et parallèles (R) et une paire de deuxièmes unités de mouvement (5) configurées pour saisir les produits respectifs (P) à souder, dans lequel les moyens de déplacement (3) comprennent deux corps de support mobiles par translation, de préférence indépendamment, dans un plan parallèle aux faisceaux laser (R) sous l'action d'au moins une première unité de mouvement (4) respective, et dans lequel chacune des deuxièmes unités de mouvement (5) est montée sur le corps de support respectif et est entraînée en rotation autour d'un axe respectif.

18. Système selon la revendication 17, dans lequel le dispositif d'alimentation (6) est configuré pour alimenter les chariots de transport (7) individuellement en séquence en correspondance du tronçon de fonctionnement et les deuxièmes unités de mouvement (5) sont configurées pour saisir les produits respectifs (P) de la paire de produits (P) ; les premières unités de mouvement (4) étant configurées pour espacer les corps de support respectifs l'un de l'autre.
